# EUROPEAN PATENT APPLICATION

(11) **EP 4 765 394 A1**
(43) Date of publication of application: **24.06.2026**
(21) Application number: 24922407.2
(22) Date of filing: 21.11.2024
(51) Int. Cl.: H01M 50/24, H01M 50/211, H01M 10/6554, H01M 10/613

(54) **BATTERY MODULE**

(30) Priority: 30.01.2024 KR 20240014258
(71) Applicant: LG Energy Solution, Ltd., Seoul 07335 (KR)
(72) Inventor: HAN, Hyun Gyu, Daejeon 34122 (KR)
(74) Representative: Plasseraud IP
(86) International application number: PCT/KR2024/018556
(87) International publication number: WO 2025/164898

(57) **Abstract**

A battery module according to an embodiment of the present disclosure may include a module housing having an accommodation space, and a plurality of pouch-type battery cells placed horizontally and stacked in a thickness direction within the accommodation space, wherein the battery cell includes a body portion accommodating an electrode assembly, and a sealing portion extended from an edge of the body portion, at least part of the sealing portion being folded down to prevent moisture buildup.

## Description

### TECHNICAL FIELD

### CROSS-REFERENCE TO RELATED APPLICATIONS

The present application claims priority to Korean Patent Application No. 10-2024-0014258 filed on January 30, 2024 in the Republic of Korea, the disclosure of which is incorporated herein by reference.

### TECHNICAL FIELD

The present disclosure relates to a battery module, and more particularly, to a battery module accommodating a plurality of pouch-type battery cells.

### BACKGROUND ART

Currently, a battery module of pouch-type secondary battery cells has a structure in which a cooling plate is located at the bottom of the module to cool the battery cells, and the battery cells standing vertically are stacked in the horizontal direction and cooled from the bottom by the cooling plate.

In this case, when a thermal event occurs, flames are released in the upward and downward directions, and to prevent the flames in the inward direction of a device such as a vehicle on which the battery module is mounted, there is a need for a structure for preventing thermal propagation on top.

In addition, due to the vertical placement of the battery cells, the battery cells are vulnerable to external shocks of the top-bottom direction, and have the decline in electrical stability due to moisture formed on the bottom by condensation during cooling.

The above-described background was possessed or obtained by the inventors in the conception of the present disclosure, and is not necessarily known technology that was publicly available before filing the application.

### SUMMARY

### TECHNICAL PROBLEM

The present disclosure is designed to solve the above-described problem, and therefore,
the present disclosure is directed to providing a battery module for improving thermal stability of battery cells by cooling the battery cells from two sides.

The present disclosure is further directed to providing a battery module for improving electrical stability by preventing condensation-induced moisture buildup.

### TECHNICAL SOLUTION

A battery module according to an embodiment of the present disclosure may include a module housing having an accommodation space, and a plurality of pouch-type battery cells placed horizontally and stacked in a thickness direction within the accommodation space, wherein the battery cell includes a body portion accommodating an electrode assembly, and a sealing portion extended from an edge of the body portion, at least part of the sealing portion being folded down to prevent moisture buildup.

The battery module may further include a cooling plate disposed in the accommodation space to cool the battery cell by contact with the battery cell.

Stacks of the battery cells may be arranged in a grid pattern along a length direction and a width direction of the battery cells, and the cooling plate may be extended along the length direction of the battery cells.

The cooling plate may be extended from an end portion of the accommodation space to an opposite end portion.

The cooling plate may include a plurality of cooling plates arranged apart from each other along the width direction of the battery cells.

The cooling plate may be placed in a direction perpendicular to a ground.

The cooling plate may contact the battery cell at two end portions of the battery cell in the width direction.

The sealing portion may include a side area folded down from two sides of the battery cell in a length direction, and a terrace area surrounding an electrode tab located at an end portion of the battery cell in the length direction.

The cooling plate may include a side cooling portion extended along the length direction of the battery cell to cool the side area, and a terrace cooling portion extended from the side cooling portion to cool the terrace area.

The terrace cooling portion may be extended in a direction from an end portion of the side cooling portion toward the electrode tab.

The terrace cooling portion may overlap the terrace area.

### ADVANTAGEOUS EFFECTS

The battery module according to the present disclosure may improve thermal stability of the battery cells by cooling the battery cells from two sides.

The battery module according to the present disclosure may improve electrical stability by preventing condensation-induced moisture buildup.

Besides, the effects of the present disclosure may include effects that may be easily predicted by those skilled in the art from the embodiments of the present disclosure.

### BRIEF DESCRIPTION OF THE DRAWINGS

FIG. 1 is a perspective view of a battery module according to Comparative Example of the present disclosure.
FIG. 2 is a plan view of a module housing of the battery module shown in FIG. 1.
FIG. 3 is a schematic cross-sectional view showing the placement structure of a battery cell and a cooling plate of a battery module according to Comparative Example of the present disclosure.
FIG. 4 is a diagram showing moisture buildup in the battery cell of FIG. 3.
FIG. 5 is a plan view of a battery module according to Embodiment 1 of the present disclosure.
FIG. 6 is a diagram schematically showing the placement of a battery cell of a battery module according to Embodiment 1 of the present disclosure.
FIG. 7 is a perspective view of the battery cell shown in FIG. 6.
FIG. 8 is a plan view showing the placement of a battery cell and a cooling plate of a battery module according to Embodiment 1 of the present disclosure.
FIG. 9 is a schematic front view of the battery cell and the cooling plate of FIG. 8.
FIG. 10 is a plan view of a battery module according to Embodiment 2 of the present disclosure.
FIG. 11 is a front view showing the structure of a battery cell and a cooling plate of a battery module according to Embodiment 2 of the present disclosure.
FIG. 12 is a plan view of FIG. 11.
FIG. 13 is a plan view showing the structure of a battery cell and a cooling plate of a battery module according to Embodiment 3 of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. The following description is one of aspects of the embodiments, and in describing an embodiment, a certain detailed description of known functions or elements is omitted for clarity of description of the present disclosure.

In affixing the reference numerals to the elements in each drawing, the identical or similar reference numerals are affixed to the identical or similar elements throughout the specification. An element including a shared function with an element included in any one embodiment will be described using the same name in other embodiment. The terms or words used in the specification and the appended claims should not be construed as limited to general and dictionary meanings and rather, should be interpreted based on the meanings and concepts corresponding to the technical aspect of the present disclosure on the basis of the principle that the inventor is allowed to define the terms appropriately for the best explanation.

Additionally, the present disclosure is not limited to the above-described embodiments, and a variety of modifications and changes may be made thereto by persons having ordinary skill in the technical field pertaining to the present disclosure from this disclosure. Therefore, the aspect of the present disclosure should not be limited to the disclosed embodiments, and it should be understood that the appended claims and their equal or equivalent variations fall within the scope of the present disclosure.

### Comparative Example

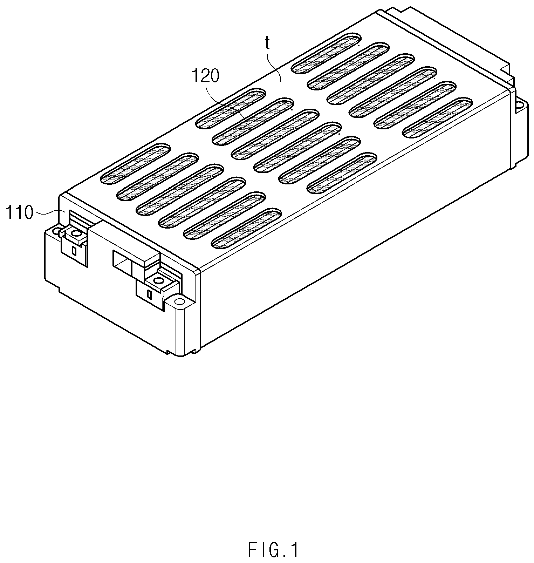

FIGS. 1 to 4 show a battery module according to Comparative Example of the present disclosure.

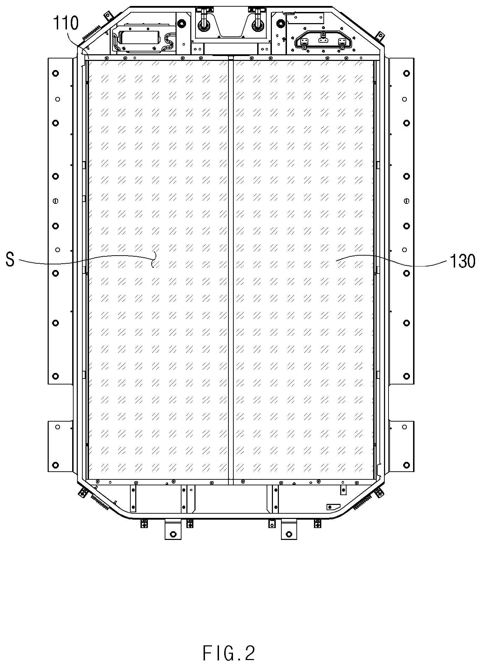

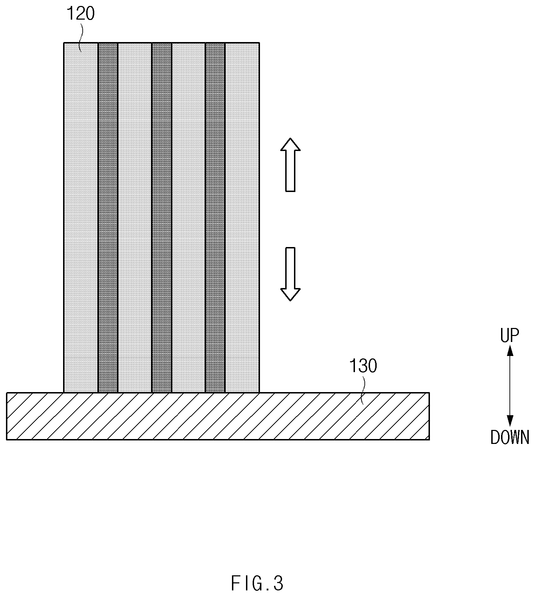

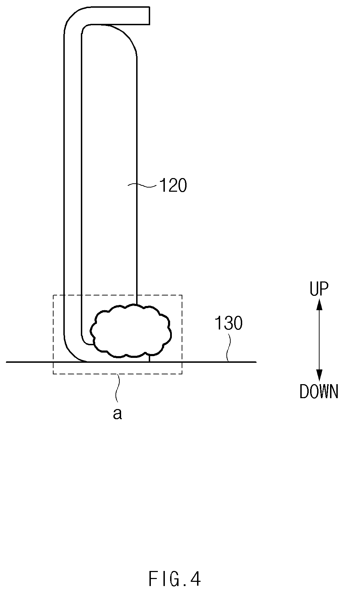

FIG. 1 is a perspective view of the battery module according to Comparative Example of the present disclosure. FIG. 2 is a plan view of a module housing 110 of the battery module shown in FIG. 1. FIG. 3 is a schematic cross-sectional view showing the placement structure of a battery cell and a cooling plate of the battery module according to Comparative Example of the present disclosure. FIG. 4 is a diagram showing moisture buildup in the battery cell of FIG. 3.

Referring to FIGS. 1 to 4, the battery module according to Comparative Example of the present disclosure may include the module housing 110, the battery cell 120 and the cooling plate 130.

The module housing 110 may be configured to accommodate a plurality of battery cells 120, and have an accommodation space (s) for accommodating the battery cells 120 inside. The module housing 110 may have a shape of a rectangular frame having an open top, and the plurality of battery cells 120 may be stacked and accommodated in the accommodation space (s) of the module housing 110. The open top of the module housing 110 may be covered with a top plate (t). The top plate (t) may have a plurality of holes to vent heat or gas when the heat or gas is generated from the plurality of battery cells 120 accommodated in the module housing 110 (for example, in the event of thermal runaway).

The plurality of battery cells 120 may be stacked in the accommodation space (s) of the module housing 110. In the battery module according to Comparative Example of the present disclosure, the plurality of battery cells 120 may be vertically positioned and stacked in the accommodation space (s) of the module housing 110. In other words, each battery cell 120 may be placed in standing position in the top-bottom direction perpendicular to the ground, and a stack direction in which the plurality of battery cells 120 is stacked may be a horizontal direction parallel to the ground (see FIG. 3).

In this case, because the battery cell 120 is placed in standing position in the top-bottom direction, when condensation occurs on the battery cell 120, moisture may flow downward and build up, and a side (a) of the battery cell 120 that contacts the cooling plate 130 at the lower side of the accommodation space (s) may be exposed to moisture (see FIG. 4).

The cooling plate 130 may be configured to cool the battery cell 120. The cooling plate 130 may cool the battery cell 120 by contact with a part of the battery cell 120. The cooling plate 130 may be located at the inner bottom surface of the accommodation space (s) of the module housing 110. The cooling plate 130 may be formed in a shape of a rectangular plate having a predetermined thickness, and for example, may have a cooling channel therein to cool the battery cell 120 through heat transfer with the battery cell 120.

In the battery module according to Comparative Example of the present disclosure, the cooling plate 130 may cool the battery cell 120 by contact with the side of the battery cell 120 located at the lower side of the accommodation space (s). In this case, only the side of the battery cell 120 may be cooled, resulting in low cooling efficiency, and further, when an event such as thermal runaway occurs, heat may be spread in the width direction of the battery cell 120, causing thermal damage to a device (for example, a vehicle) in which the battery module is mounted due to flames released through the opening of the top plate (t).

In addition, because the battery cell 120 vertically stands from the bottom surface, the battery cell 120 may be vulnerable to shocks of the top-bottom direction.

### Embodiment 1

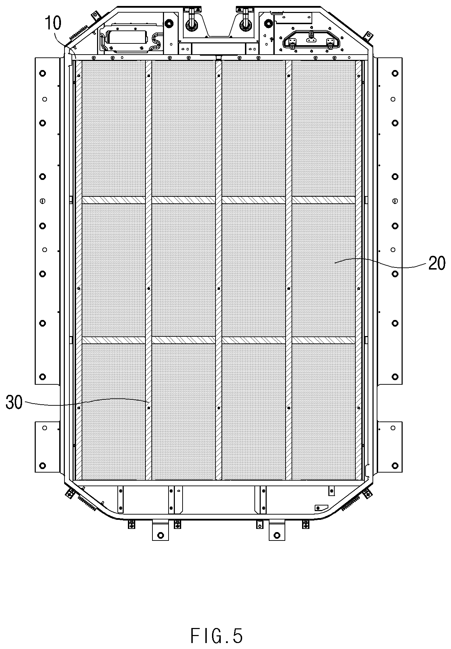

FIGS. 5 to 9 show a battery module according to Embodiment 1 of the present disclosure.

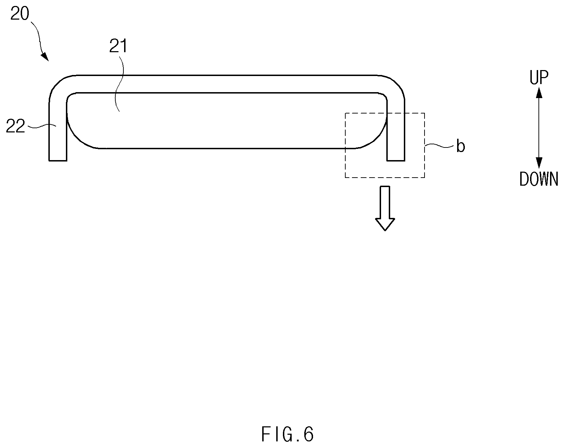

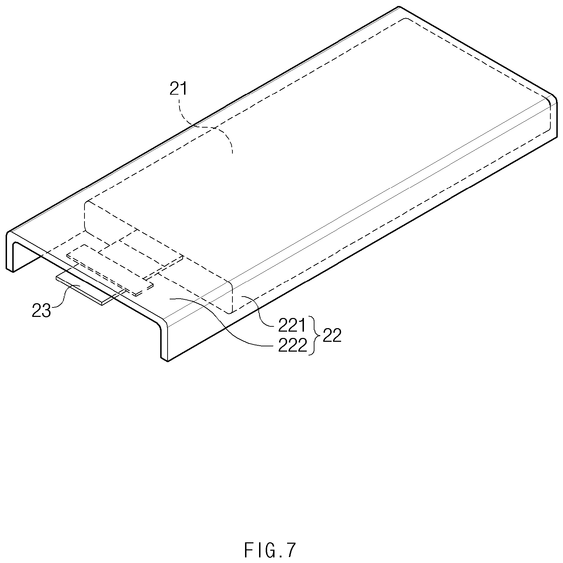

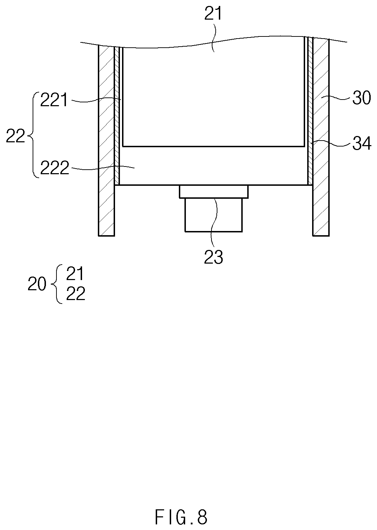

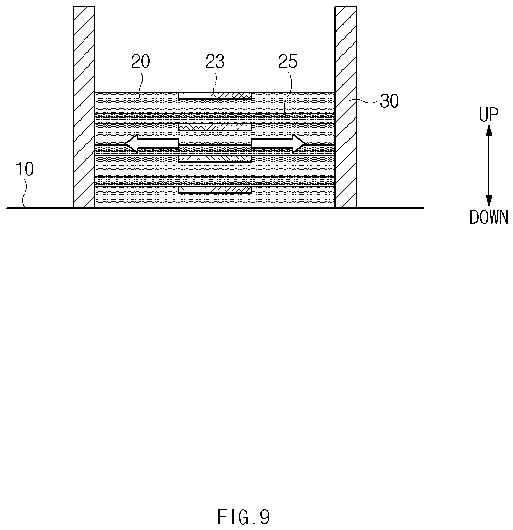

FIG. 5 is a plan view of the battery module according to Embodiment 1 of the present disclosure. FIG. 6 is a diagram schematically showing the placement of a battery cell 20 of the battery module according to Embodiment 1 of the present disclosure. FIG. 7 is a perspective view of the battery cell 20 shown in FIG. 6. FIG. 8 is a plan view showing the placement of the battery cell 20 and a cooling plate 30 of the battery module according to Embodiment 1 of the present disclosure. FIG. 9 is a schematic front view of the battery cell 20 and the cooling plate 30 of FIG. 8.

Referring to FIGS. 5 to 9, the battery module according to Embodiment 1 of the present disclosure may include a module housing 10, the battery cell 20 and the cooling plate 30.

The module housing 10 may be configured to accommodate a plurality of battery cells 20, and have an accommodation space for accommodating the battery cells 20 inside. The module housing 10 may have a shape of a rectangular frame having an open top, and the plurality of battery cells 20 may be stacked and accommodated in the accommodation space (s) of the module housing 10. The plurality of battery cells 20 may be stacked in the accommodation space (s) of the module housing 10.

In the battery module according to Embodiment 1 of the present disclosure, the battery cells 20 may be positioned in the horizontal direction within the internal accommodation space of the module housing 10. The battery cell 20 may be, for example, a pouch-type secondary battery cell, and have a rectangular shape having a predetermined thickness as a whole. The battery cells 20 may be positioned in the horizontal direction and stacked along the top-bottom direction or the thickness direction (see FIG. 9), and stacks of battery cells 20 stacked along the top-bottom direction may be arranged in the module housing 10 in a grid pattern along the width direction and the length direction of the battery cells 20. A support pad 25 may be disposed between the stacked battery cells 20. The support pad 25 may be stacked between the battery cells 20 such that the battery cells 20 may be spaced a predetermined distance apart from each other in the top-bottom direction, to support the battery cells 20 in the thickness direction, and apply the optimum pressure to the battery cells 20.

The battery cell 20 may include a body portion 21 and a sealing portion 22. The battery cell 20 may be formed by coupling an electrode assembly to an outer pouch formed in a preset shape and sealing, and accordingly, the body portion 21 and the sealing portion 22 may be integrally formed, but are not limited thereto.

The body portion 21 may accommodate the electrode assembly. The sealing portion 22 may be extended from the edge of the body portion 21, and may be folded or rolled into a shape of a sheet with a seal formed between outer packaging materials. At least part of the sealing portion 22 may be folded down to prevent condensation-induced moisture buildup. In other words, a part of the sealing portion 22 may be extended downward from the edge of the body portion 21.

By adopting the above-described configuration, when moisture is formed by condensation on the battery cell 20, the moisture does not stay in the battery cell 20, and because the folding portion (b) of the sealing portion 22 opens down, the moisture may flow smoothly. Accordingly, it may be possible to prevent the continued exposure of the battery cell 20 to moisture. Because the sealing portion 22 has electrical insulative properties, the insulation and electrical stability may be improved when the battery cells are stacked with the sealing portion 22 folded down from the edge to cover the body portion 21.

The sealing portion 22 of the battery cell 20 may include a side area 221 and a terrace area 222 (see FIG. 7). The side area 221 may be an area that is folded down from two sides of the battery cell 20 in the length direction. The terrace area 222 may be the remaining area of the sealing portion 22 except the side area 221, and cover an electrode tab and lead portion 23 located at an end portion of the battery cell 20 in the length direction. In the case of the battery module according to Embodiment 1 of the present disclosure, the battery cell 20 may be cooled by contact between the side area 221 of the sealing portion 22 and the cooling plate 30. In other words, the battery cell 20 may be cooled from the two sides by the cooling plate 30.

The cooling plate 30 may be configured to cool the battery cell 20. The cooling plate 30 may be positioned in the accommodation space of the module housing 10 together with the battery cell 20. The cooling plate 30 may cool the battery cell 20 by contact with a part of the battery cell 20 in the accommodation space.

The cooling plate 30 may be formed in a shape of a rectangular plate having a predetermined thickness, and for example, may have a cooling member such as a cooling channel therein to cool the battery cell 20 through heat transfer with the battery cell 20, or may have high thermal conductivity to cool the battery cell 20 by heat transfer from the battery cell 20 to the outside, but is not limited thereto.

In the case of the battery module according to Embodiment 1 of the present disclosure, the cooling plate 30 may be placed in a direction perpendicular to the ground. The cooling plate 30 may be placed perpendicular to the ground and located between the stacks of battery cells 20 arranged in the grid pattern.

The cooling plate 30 may be, for example, placed along the length direction of the battery cell 20. In this case, the cooling plate 30 may be extended along the length direction of the battery cell 20. The cooling plate 30 may include a plurality of cooling plates 30, and each of the plurality of cooling plates 30 may be extended along the length direction of the battery cell 20, and extended from one end portion to the other end portion of the accommodation space.

The plurality of cooling plates 30 may be arranged apart from each other along the width direction of the battery cell 20. In other words, the cooling plate 30 may be located to cool the battery cell 20 by contact with two end portions of the battery cell 20 in the width direction. The cooling plate 30 may cool the two sides of the battery cell 20 by contact with the two sides of the battery cell 20, thereby achieving bidirectional cooling of the battery cell 20. The cooling plate 30 may contact the sealing portion 22 of the battery cell 20. Specifically, the cooling plate 30 may cool the battery cell 20 by contact with the side area 221 of the sealing portion 22. The cooling plate 30 and the side area 221 may be joined and held together by a fixing member 34 such as thermal resin having high thermal conductivity.

The cooling plate 30 may be disposed across the accommodation space along the length direction of the battery cell 20 as described above. By adopting the above-described configuration, the cooling plate 30 of the battery module according to Embodiment 1 of the present disclosure may act as a barrier to stop thermal propagation from the two sides of the battery cell 20 and cool the battery cell 20 when a thermal event occurs in the battery cell 20.

In other words, because the plurality of cooling plates 30 is arranged apart from each other in the module housing 10, the accommodation space for the battery cells 20 may be separated into a plurality of divided spaces, and the spatial division may effectively prevent thermal propagation between the battery cells 10. It may be because thermal propagation (TP) occurring in each divided space does not spread to the adjacent divided spaces separated by the cooling plate 30. The divided spaces within the accommodation space formed by the plurality of cooling plates 30 may be formed along the length direction of the battery cells 20.

As thermal propagation between the battery cells 20 occurs primarily in the width direction of the battery cells 20, it may be possible to prevent thermal propagation to the adjacent battery cells 20 in the width direction more efficiently by the structure of the cooling plate 30 in contact with the two sides of the battery cells 20, and the cooling plate 30 may stop thermal propagation between the battery cells 20 and cool the battery cells 20 at the same time, thereby significantly suppressing thermal runaway of the battery module.

Further, because the plate-shaped cooling plate 30 has the shape of the frame extended from one end portion of the module housing 10 to the other end portion, the cooling plate 30 may support the structure of the module housing, thereby greatly increasing the rigidity of the battery module itself, and the horizontal placement of the plurality of battery cells 20 may increase shock resistance and stability of the module.

### Embodiment 2

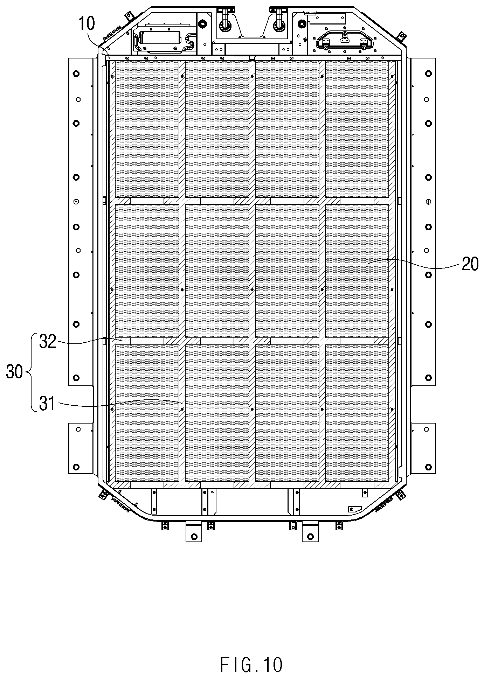

FIGS. 10 to 12 show the battery module according to Embodiment 2 of the present disclosure.

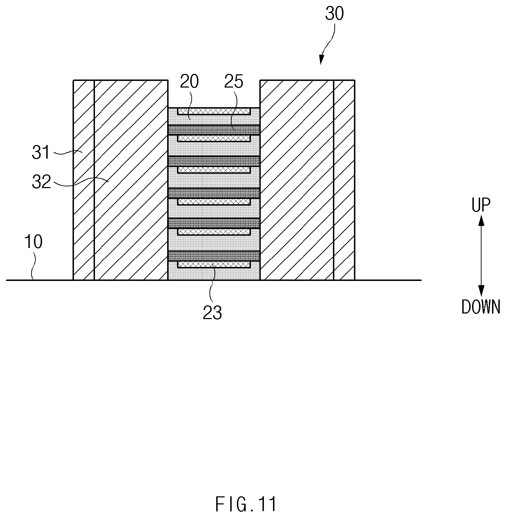

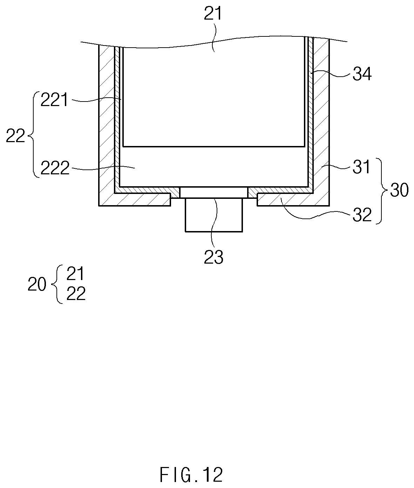

FIG. 10 is a plan view of the battery module according to Embodiment 2 of the present disclosure, FIG. 11 is a front view showing the structure of the battery cell 20 and the cooling plate 30 of the battery module according to Embodiment 2 of the present disclosure, and FIG. 12 is a plan view of FIG. 11.

Embodiment 2 of the present disclosure may be different from Embodiment 1 in that a part of the cooling plate 30 is formed in a different shape to additionally cool the terrace area 222 of the sealing portion 22. Except the difference, it should be noted that the foregoing description of the battery module according to Embodiment 1 of the present disclosure may be equally applied to Embodiment 2, and therefore, the description that shares with Embodiment 1 is omitted, and Embodiment 2 will be described based on the difference from Embodiment 1.

Referring to FIGS. 10 to 12, the cooling plate 30 of the battery module according to Embodiment 2 of the present disclosure may include a side cooling portion 31 and a terrace cooling portion 32.

The side cooling portion 31 may be configured to cool the side area 221 of the sealing portion 22, and be extended along the length direction of the battery cell 20. A plurality of side cooling portions 31 may be arranged apart from each other along the width direction of the battery cell 20, and be configured to cool the battery cell 20 by contact with the two end portions of the battery cell 20 in the width direction. The side cooling portion 31 may cool the battery cell 20 by contact with the side area 221 of the sealing portion 22.

The terrace cooling portion 32 may be configured to cool the terrace area 222 of the sealing portion 22. The terrace cooling portion 32 may be extended from the side cooling portion 31. The terrace cooling portion 32 may be extended in a bent shape in a direction from the side cooling portion 31 toward the electrode tab-lead portion 23 of the battery cell 20. The terrace cooling portion 32 may surround the periphery of the terrace area 222 of the sealing portion 22, together with the side cooling portion 31. The terrace cooling portion 32 may be formed with such a length that the terrace cooling portion 32 extends to the electrode tab-lead portion 23 but does not contact the electrode tab-lead 23. The terrace cooling portion 32 and the side cooling portion 31 may be integrally formed, and accordingly the cooling plate 30 may have an L shape, but is not limited thereto.

By adopting the terrace cooling portion 32 of the cooling plate 30 to additionally cool the terrace area 222 of the sealing portion 22, it may be possible to suppress volume expansion of gas inside the battery cell 20 flowing to the terrace area 222 of the sealing portion 22, thereby reducing damage to the battery cell due to gas leaks.

The cooling plate 30 and the side area 221 may be joined and held together by the fixing member 34 such as, for example, thermal resin having high thermal conductivity.

### Embodiment 3

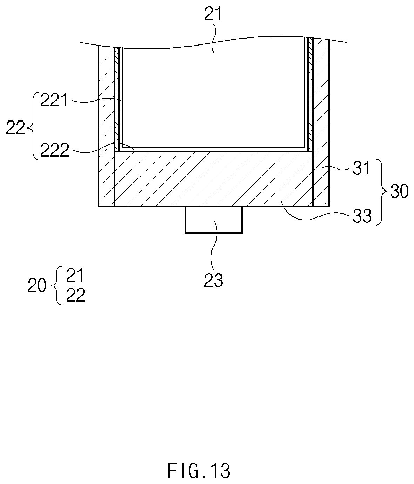

FIG. 13 is a plan view showing the structure of the battery cell 20 and the cooling plate 30 of the battery module according to Embodiment 3 of the present disclosure.

Embodiment 3 of the present disclosure may be different from Embodiment 2 in that a part of the terrace cooling portion 33 that cools the terrace area 222 is formed in a different shape. Likewise, the shared description is omitted, and Embodiment 2 will be described based on the difference.

Referring to FIG. 13, the cooling plate 30 of the battery module according to Embodiment 2 of the present disclosure may include the side cooling portion 31 and the terrace cooling portion 33.

The terrace cooling portion 33 may be extended from the side cooling portion 31, and overlap the terrace area 222 of the sealing portion 22. In this case, the terrace cooling portion 33 may be extended between two adjacent side cooling portions 31 spaced apart from each other in the width direction of the battery cell 20. The side cooling portion 31 and the terrace cooling portion 33 may be integrally formed, and the cooling plate 30 may have a 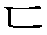 shape.

Because the terrace cooling portion 33 overlaps the terrace area 222 in the stack direction of the battery cells 20, it may be possible to greatly improve the cooling efficiency of the terrace area 222, and further reduce gas venting that may occur in the terrace area 222. In addition, as the adjacent side cooling portions 31 are structurally connected, structural rigidity and stability of the cooling plate 30 may be improved.

Although the present disclosure has been hereinabove described with regard to a limited number of embodiments and drawings, the foregoing description is provided to describe the technical aspect of the present disclosure by way of example, and a variety of modifications and change may be made thereto by persons having ordinary skill in the technical field pertaining to the present disclosure without departing from the essential features of the present disclosure.

Therefore, the disclosed embodiments of the present disclosure are provided to describe the technical aspect of the present disclosure but not intended to be limiting, and the technical scope of the present disclosure is not limited by these embodiments. The scope of protection of the present disclosure should be interpreted by the appended claims, and it should be interpreted that all technical aspects in the equivalent scope are included in the scope of protection of the present disclosure.

### [List of Reference Numerals]

10: Module housing
20: Battery cell
21: Body portion
22: Sealing portion
221: Side area
222: Terrace area
23: Electrode tab-lead portion
25: Support pad
30: Cooling plate
31: Side cooling portion
32, 33: Terrace cooling portion

## Claims

1. A battery module comprising:
a module housing having an accommodation space; and
a plurality of pouch-type battery cells placed horizontally and stacked in a thickness direction within the accommodation space,
wherein the battery cell includes:
a body portion accommodating an electrode assembly; and
a sealing portion extended from an edge of the body portion, at least part of the sealing portion being folded down to prevent moisture buildup.

2. The battery module according to claim 1, further comprising:
a cooling plate disposed in the accommodation space to cool the battery cell by contact with the battery cell.

3. The battery module according to claim 2,
wherein stacks of the battery cells are arranged in a grid pattern along a length direction and a width direction of the battery cells, and the cooling plate is extended along the length direction of the battery cells.

4. The battery module according to claim 3,
wherein the cooling plate is extended from an end portion of the accommodation space to an opposite end portion.

5. The battery module according to claim 3,
wherein the cooling plate includes a plurality of cooling plates arranged apart from each other along the width direction of the battery cells.

6. The battery module according to claim 2,
wherein the cooling plate is placed in a direction perpendicular to a ground.

7. The battery module according to claim 3,
wherein the cooling plate contacts the battery cell at two end portions of the battery cell in the width direction.

8. The battery module according to claim 2,
wherein the sealing portion includes:
a side area folded down from two sides of the battery cell in a length direction; and
a terrace area surrounding an electrode tab located at an end portion of the battery cell in the length direction.

9. The battery module according to claim 8,
wherein the cooling plate includes:
a side cooling portion extended along the length direction of the battery cell to cool the side area; and
a terrace cooling portion extended from the side cooling portion to cool the terrace area.

10. The battery module according to claim 9,
wherein the terrace cooling portion is extended in a direction from an end portion of the side cooling portion toward the electrode tab.

11. The battery module according to claim 9,
wherein the terrace cooling portion overlaps the terrace area.
